# EUROPÄISCHE PATENTSCHRIFT

(11) **EP 3 377 788 B1**
(45) Veröffentlichungstag und Bekanntmachung des Hinweises auf die Patenterteilung: **20.01.2021**
(21) Anmeldenummer: 16791621.2
(22) Anmeldetag: 08.11.2016
(51) Int. Cl.: F16H 61/12, F16H 63/48

(54) **VERFAHREN UND ÜBERWACHUNGSVORRICHTUNG ZUM BETREIBEN EINES KRAFTFAHRZEUGS**
METHOD AND MONITORING APPARATUS FOR OPERATING A MOTOR VEHICLE
PROCÉDÉ ET DISPOSITIF DE SURVEILLANCE PERMETTANT DE FAIRE FONCTIONNER UN VÉHICULE AUTOMOBILE

(30) Priorität: 17.11.2015 DE 102015222624
(43) Veröffentlichungstag der Anmeldung: 26.09.2018
(73) Patentinhaber: Audi AG, 85045 Ingolstadt (DE)
(72) Erfinder: GEISSENHÖNER, Martin, 85055 Ingolstadt (DE); SCHLOCKERMANN, Carl Johannes, 81669 München (DE)
(86) Internationale Anmeldenummer: PCT/EP2016/077021
(87) Internationale Veröffentlichungsnummer: WO 2017/084917

(56) Entgegenhaltungen:
- EP-B1- 2 361 812
- WO-A1-99/46520
- WO-A1-2007/043957
- WO-A1-2015/090568
- DE-A1- 10 023 070
- DE-A1-102007 028 567
- GB-A- 2 423 800
- US-A1- 2004 010 361

## Beschreibung

Die Erfindung betrifft ein Verfahren und eine Überwachungsvorrichtung zum Betreiben eines Kraftfahrzeugs. Des Weiteren betrifft die Erfindung ein Kraftfahrzeug mit einer derartigen Überwachungsvorrichtung.

Bei Kraftfahrzeugen mit Automatikgetriebe kann ein Fahrer nach dem Abstellen des Kraftfahrzeugs üblicherweise eine Parkstellung im Automatikgetriebe einlegen und/oder eine elektronische Parkbremse anziehen, um ein Wegrollen des Kraftfahrzeugs zu unterbinden. Zum Auswählen der Parkstellung kann der Fahrer üblicherweise einen Wählhebel betätigen, wobei die Wählhebelbetätigung über ein Wählhebelsteuergerät erfasst und an ein Getriebesteuergerät weitergeleitet wird, welches letztlich das Einlegen der Parkstellung bewirkt. Allerdings kann es zu Kommunikationsfehlern kommen, so dass beispielsweise die Parkstellung des Automatikgetriebes nicht mehr eingelegt und/oder die elektronische Parkbremse nicht mehr angezogen werden kann. Darüber hinaus kann es bei derartigen Kommunikationsfehlern auch passieren, dass ein Fahrer keine Warnung hinsichtlich der vorliegenden Fehlfunktion bezüglich des Automatikgetriebes und/oder der elektronischen Parkbremse erhält. Ein sicheres Abstellen des Kraftfahrzeugs kann im Fehlerfall dadurch erschwert oder gegebenenfalls auch unmöglich gemacht werden, ohne dass der Fahrer darüber in Kenntnis gesetzt wird.

Die DE 10 2010 007 899 B4 zeigt ein Verfahren zum Betreiben eines Kraftfahrzeugs. Falls das Kraftfahrzeug mittels eines automatischen Längsführungssystems bis zum Stillstand abgebremst worden ist, wird eine elektronische Parkbremse des Kraftfahrzeugs aktiviert. Falls an der elektronischen Parkbremse dabei eine Fehlfunktion detektiert wird, wird entweder automatisch eine Parkstufe eines Automatikgetriebes des Kraftfahrzeugs eingelegt oder mittels einer Anzeigeeinrichtung des Kraftfahrzeugs ein Hinweis ausgegeben, die Parkstufe des Automatikgetriebes manuell einzulegen.

Die DE 10 2008 018 470 A1 zeigt eine Vorrichtung zum Betätigen einer Parksperre eines Kraftfahrzeugs. Mittels zwei voneinander unabhängigen Steuereinheiten kann eine Betätigung der Parksperre erfolgen. Jeder der Steuereinheiten ist dafür ein separates Stellmittel zur Betätigung der Parksperre zugeordnet. Die beiden Steuereinheiten können über eine Bus-Verbindung des Kraftfahrzeugs miteinander kommunizieren. Sobald ein fehlerhafter Betrieb von einer der beiden Steuereinheiten erfasst wird, kann eine entsprechende Fehlermeldung an einen Fahrer des Kraftfahrzeugs ausgegeben werden.

Die EP 2 361 812 B1 zeigt ein Verfahren zum Betreiben eines Nutzfahrzeugs. Falls während einer automatischen Betätigung einer Feststellbremse des Nutzfahrzeugs im Rahmen eines Testzyklus erfasst wird, dass das Nutzfahrzeug nicht stehen bleibt, wird ein Fehlersignal an ein Steuergerät übermittelt. In Folge dessen schließt das Steuergerät eine Betriebsbremse des Nutzfahrzeugs. Darüber hinaus kann es vorgesehen sein, dass ein das Fehlersignal betreffendes Signal an einen Fahrer des Nutzfahrzeugs ausgegeben wird.

In der US 2004/0010361 A1 wird eine Vorrichtung zum Durchführen von Notfallmaßnahmen für ein Fahrzeug mit Automatikgetriebe beschrieben. Eine Kontrolleinheit dieser Vorrichtung ist dazu ausgelegt, Getriebeparameter oder Daten von weiteren Kontrolleinheiten, wie zum Beispiel einem Bremssteuersystem, zu überwachen und bei einem erfassten Fehler optische und akustische Signale an den Fahrer des Fahrzeugs auszugeben.

Die GB 2 423 800 A zeigt ein Fahrzeug mit einem Getriebesteuersystem für ein Automatikgetriebe. Eine Getriebesteuereinheit des Getriebesteuersystems ist dazu ausgelegt, zum Beispiel einen Defekt in einem Wählhebel des Getriebesteuersystems zu erfassen und einen Fahrer des Fahrzeugs mittels einer Anzeige auf einer Anzeigeeinheit des Fahrzeugs über den Defekt zu informieren.

Es ist die Aufgabe der vorliegenden Erfindung, eine Lösung zum rollgesicherten Abstellen eines ein Automatikgetriebe aufweisenden Kraftfahrzeugs bereitzustellen.

Diese Aufgabe wird durch ein Verfahren sowie durch eine Überwachungsvorrichtung zum Betreiben eines Kraftfahrzeugs mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Kraftfahrzeugs wird überwacht, ob zwischen einem Getriebesteuergerät eines Automatikgetriebes des Kraftfahrzeugs, einem Wählhebelsteuergerät des Automatikgetriebes und/oder einem Parkbremsensteuergerät einer elektronischen Parkbremse des Kraftfahrzeugs ein Kommunikationsausfall vorliegt. Unter einem Kommunikationsausfall im Sinne der Erfindung ist insbesondere zu verstehen, dass eine Kommunikationsstörung zwischen den betreffenden Steuergeräten vorliegt, also Signale zwischen den Steuergeräten nicht übertragen werden können. Zusätzlich wird überwacht, ob aufgrund einer Fehlfunktion am Automatikgetriebe selbst und/oder aufgrund einer Fehlfunktion an einem Wählhebel selbst zum Auswählen von Fahrstufen des Automatikgetriebes eine Parkstellung des Automatikgetriebes nicht eingelegt werden kann. Das Getriebesteuergerät, das Parkbremsensteuergerät und ein Anzeigesteuergerät einer Anzeigeeinrichtung des Kraftfahrzeugs werden in Abhängigkeit davon betrieben, zwischen welchen der überwachten Steuergeräte ein Kommunikationsausfall erfasst worden ist und ob die Parkstellung aufgrund einer Fehlfunktion am Automatikgetriebe selbst und/oder aufgrund einer Fehlfunktion am Wählhebel selbst nicht eingelegt werden kann.

Mittels des erfindungsgemäßen Verfahrens wird ein Redundanzkonzept für ein rollgesichertes Abstellen eines Kraftfahrzeugs bereitgestellt, wobei das rollgesicherte Abstellen des Kraftfahrzeugs auf das Getriebesteuergerät, das Parkbremsensteuergerät und das Anzeigesteuergerät verteilt wird. Basierend auf der Kommunikationsüberwachung des Getriebesteuergeräts, des Wählhebelsteuergeräts und des Parkbremsensteuergeräts werden das Getriebesteuergerät, das Parkbremsensteuergerät und das Anzeigesteuergerät angesteuert, so dass ein rollgesichertes Abstellen des Kraftfahrzeugs ermöglicht werden kann. Unter einem Kommunikationsausfall ist insbesondere zu verstehen, dass die betreffenden Steuergeräte keine Steuersignale zum Betätigen der Ihnen zugeordneten Funktionseinheiten übertragen können. Im Falle des Getriebesteuergeräts kann dies bedeuten, dass das Getriebesteuergerät das Automatikgetriebe nicht zum Einlegen oder Verändern einer Gangstufe ansteuern kann. Im Falle des Wählhebelsteuergeräts kann dies bedeuten, dass ein eine Betätigung eines Wählhebels zum Auswählen einer Gangstufe des Automatikgetriebes betreffendes Signal nicht vom Wählhebelsteuergerät erfasst und/oder nicht an das Getriebesteuergerät übertragen werden kann. Im Falle des Parkbremsensteuergerät kann ein Kommunikationsausfall bedeuten, dass das Parkbremsensteuergerät die elektronische Parkbremse nicht zum Aktivieren der Parkbremse ansteuern kann.

Dadurch, dass zusätzlich überwacht wird, ob aufgrund einer Fehlfunktion am Automatikgetriebe selbst und/oder aufgrund einer Fehlfunktion am Wählhebel selbst eine Parkstellung nicht eingelegt werden kann, können zudem auch Fälle erfasst werden, bei welchen zwar eine Kommunikation zwischen den betreffenden Steuergeräten nicht gestört ist, jedoch ein wegrollsicheres Abstellen des Kraftfahrzeugs dennoch beeinträchtigt werden könnte. Zum Beispiel könnte es sein, dass ein Einlegen der Parkstellung aufgrund einer Fehlfunktion am Automatikgetriebe selbst nicht möglich ist, beispielsweise weil ein mechanisches Problem beim Automatikgetriebe vorliegt. In einem derartigen Fall würde trotz einer korrekten Ansteuerung des Automatikgetriebes durch das Getriebesteuergerät dennoch die Parkstellung nicht eingelegt werden können. Zudem könnte es auch sein, dass am Wählhebel selbst eine Fehlfunktion vorliegt, beispielsweise weil eine Taste zum Auswählen der Parkstellung defekt ist, sei es aufgrund mechanischer oder elektronischer Beeinträchtigungen. In einem derartigen Fall würde trotz einer entsprechenden Betätigung des Wählhebels die Parkstellung beim Automatikgetriebe nicht eingelegt werden können.

Durch die erfindungsgemäße Lösung wird also ein sicheres Abstellen des Kraftfahrzeugs auch bei einer Kommunikationsstörung zwischen den überwachten Steuergeräten ermöglicht. Zum rollgesicherten Abstellen des Kraftfahrzeugs erfolgen dabei vorzugsweise Fahrerwarnungen, automatische Haltefunktionen des Kraftfahrzeugs mittels der elektronischen Parkbremse und/oder automatische Haltefunktionen mittels des Automatikgetriebes. Insbesondere können die unterschiedlichen Steuergeräte auf unterschiedliche Bussegmente aufgeteilt sein, wobei mittels des erfindungsgemäßen Verfahrens eine optimale Aufteilung einer Fehlerhandhabung erfolgen kann. Ferner kann durch die erfindungsgemäße Lösung auch überwacht werden, ob aufgrund von Fehlfunktionen am Wählhebel oder am Automatikgetriebe ein sicheres Abstellen des Kraftfahrzeugs beeinträchtigt werden könnte, so dass beispielsweise eine automatische Haltefunktionen des Kraftfahrzeugs mittels der elektronischen Parkbremse in derartigen Fällen realisiert werden kann.

Sollte eine Fehlfunktion am Wählhebel erfasst werden, kann es beispielsweise vorgesehen sein, dass das Wählhebelsteuergerät ein entsprechendes Signal an das Parkbremsensteuergerät sendet, infolgedessen die elektronische Parkbremse aktiviert wird. Sollte eine Fehlfunktion am Automatikgetriebe erfasst werden, kann es beispielsweise vorgesehen sein, dass das Getriebesteuergerät ein entsprechendes Signal an das Parkbremsensteuergerät sendet, infolgedessen die elektronische Parkbremse aktiviert wird.

Die Erfindung sieht zudem vor, dass das Anzeigesteuergerät die Anzeigeeinrichtung zum Anzeigen einer Warnmeldung ansteuert, mittels welcher signalisiert wird, dass der Fahrer die elektronische Parkbremse betätigen soll, falls erfasst wird, dass beim Getriebesteuergerät und/oder beim Wählhebelsteuergerät ein Kommunikationsausfall vorliegt. Denn sowohl bei einem Kommunikationsausfall bei dem Getriebesteuergerät als auch bei dem Wählhebelsteuergerät könnte es passieren, dass die Parkstellung des Automatikgetriebes, also eine Parksperre des Automatikgetriebes, nicht mehr aktiviert werden kann. Dadurch, dass in einem derartigen Fall die entsprechende Warnmeldung angezeigt wird, mittels welcher signalisiert wird, dass der Fahrer die elektronische Parkbremse betätigen soll, kann ein Wegrollen des Kraftfahrzeugs auch bei einem Kommunikationsausfall des Getriebesteuergeräts und/oder des Wählhebelsteuergeräts unterbunden werden.

Eine vorteilhafte Ausführungsform der Erfindung sieht vor, dass das Anzeigesteuergerät die Anzeigeeinrichtung zum Anzeigen einer Warnmeldung ansteuert, mittels welcher signalisiert wird, dass der Fahrer die Parkstellung beim Automatikgetriebe einlegen soll, falls erfasst wird, dass beim Parkbremsensteuergerät ein Kommunikationsausfall vorliegt. Bei der Anzeigeeinrichtung kann es sich beispielsweise um ein Kombiinstrument des Kraftfahrzeugs handeln, so dass ein Fahrer des Kraftfahrzeugs die Warnmeldung besonders gut erkennen kann. Bei der Anzeigeeinrichtung kann es sich aber auch um andere im Kraftfahrzeug angeordnete Anzeigen handeln, beispielsweise um ein Display in einer Mittelkonsole oder dergleichen. Wird also ein Kommunikationsausfall beim Parkbremsensteuergerät erfasst, so kann ein Fahrer durch die besagte Warnmeldung auf einfache Weise erkennen, dass er vorsichtshalber besser die Parkstellung beim Automatikgetriebe einlegen sollte, da beim Parkbremsensteuergerät gerade eine Störung vorliegt. Dadurch kann ein Wegrollen des Kraftfahrzeugs bei einem Fehlerfall des Parkbremsensteuergeräts unterbunden werden.

Gemäß einer weiteren vorteilhaften Ausführungsform der Erfindung ist es vorgesehen, dass das Anzeigesteuergerät die Anzeigeeinrichtung zum Anzeigen einer Warnmeldung ansteuert, mittels welcher signalisiert wird, dass der Fahrer eine von einer Betätigung der elektronischen Parkbremse und von einer Betätigung des Automatikgetriebes verschiedene Sicherungsmaßnahme ergreifen soll, falls erfasst wird, dass beim Parkbremsensteuergerät und beim Getriebesteuergerät ein Kommunikationsausfall vorliegt. Beispielsweise könnte mittels der Warnmeldung angezeigt werden, dass der Fahrer das Kraftfahrzeug nur auf einem ebenen Untergrund, also in einem Bereich ohne Gefälle, abstellen soll. Alternativ oder zusätzlich kann mittels der Warnmeldung auch signalisiert werden, dass der Fahrer die lenkbaren Räder des Kraftfahrzeugs so einschlagen soll, dass eines der Räder schräg zur Fahrtrichtung an einem Bordstein anliegt. Alternativ oder zusätzlich kann mittels der Warnmeldung auch signalisiert werden, dass der Fahrer direkt eine Werkstatt anfahren soll. Mittels der entsprechenden Warnmeldung erkennt der Fahrer des Kraftfahrzeugs also auf einfache Weise, dass zumindest die Gefahr besteht, dass sowohl die Parkbremse als auch das Automatikgetriebe des Kraftfahrzeugs nicht mehr zum sicheren Abstellen des Kraftfahrzeugs in der Lage sind.

In weiterer vorteilhafter Ausgestaltung der Erfindung ist es vorgesehen, dass das Anzeigesteuergerät die Anzeigeeinrichtung zum Anzeigen einer Warnmeldung ansteuert, mittels welcher signalisiert wird, dass der Fahrer das Kraftfahrzeug abstellen soll, falls erfasst wird, dass bei zumindest einem der überwachten Steuergeräte ein Kommunikationsausfall vorliegt. Mit anderen Worten kann es also vorgesehen sein, dass eine generelle Fahrerwarnung ausgegeben wird, falls erfasst wird, dass bei zumindest einem der überwachten Steuergeräte, also dem Getriebesteuergerät, dem Wählhebelsteuergerät und/oder dem Parkbremsensteuergerät, ein Kommunikationsausfall vorliegt. In diesem Zusammenhang kann es beispielsweise auch vorgesehen sein, dass mittels der entsprechenden Warnmeldung im Detail signalisiert wird, welche der überwachten Steuergeräte gerade einen Kommunikationsausfall, und somit höchstwahrscheinlich auch einen Funktionsausfall, aufweisen. Der Fahrer des Kraftfahrzeugs wird also vorzugsweise unmissverständlich darüber in Kenntnis gesetzt, welche der überwachten Steuergeräte, welche zum sicheren Abstellen des Kraftfahrzeugs notwendig sind, gerade eine Funktionsstörung aufweisen.

Eine weitere vorteilhafte Ausführungsform der Erfindung sieht vor, dass das Anzeigesteuergerät erst dann die Anzeigeeinrichtung zum Anzeigen der jeweiligen Warnmeldungen ansteuert, sobald erfasst worden ist, dass eine Zündung des Kraftfahrzeugs deaktiviert worden ist. Mit anderen Worten kann es also vorgesehen sein, dass die jeweiligen Warnmeldungen erst angezeigt werden, sobald ein Zustand "Klemme 15 aus" erfasst worden ist. Der Fahrer wird also spätestens beim Abstellen des Kraftfahrzeugs darüber in Kenntnis gesetzt, welche Fehlfunktionen bei den überwachten Steuergeräten gerade vorliegen.

In weiterer vorteilhafter Ausgestaltung der Erfindung ist es vorgesehen, dass das Getriebesteuergerät automatisch die Parkstellung des Automatikgetriebes einlegt, sobald eine Zündung des Kraftfahrzeugs deaktiviert und falls erfasst worden ist, dass ein Kommunikationsausfall des Wählhebelsteuergeräts und/oder des Parkbremsensteuergeräts vorliegt. Insbesondere legt das Getriebesteuergerät auch automatisch dann die Parkstellung des Automatikgetriebes ein, falls beim Abstellen des Kraftfahrzeugs, insbesondere beim Deaktivieren der Zündung des Kraftfahrzeugs, zuvor noch die Leerlaufstufe des Automatikgetriebes eingelegt war, falls ein Kommunikationsausfall des Wählhebelsteuergeräts und/oder des Parkbremsensteuergeräts vorliegt. Selbst wenn aufgrund einer Fehlfunktion des Parkbremsensteuergeräts die elektronische Parkbremse nicht aktiviert und/oder aufgrund einer Fehlfunktion des Wählhebelsteuergeräts die Parkstellung beim Automatikgetriebe nicht mehr manuell eingelegt werden können sollte, wird durch automatisches Einlegen der Parkstellung des Automatikgetriebes sichergestellt, dass das Kraftfahrzeug rollgesichert abgestellt werden kann.

Eine weitere vorteilhafte Ausführungsform der Erfindung sieht vor, dass das Parkbremsensteuergerät automatisch die Parkbremse aktiviert, sobald eine Zündung des Kraftfahrzeugs deaktiviert und falls erfasst worden ist, dass ein Kommunikationsausfall des Getriebesteuergeräts vorliegt. Sollte also beispielsweise die Parkstellung beim Automatikgetriebe aufgrund eines vorliegenden Kommunikationsausfalls des Getriebesteuergeräts gar nicht eingelegt werden können, so kann durch das automatische Aktivieren der Parkbremse beim Abstellen des Kraftfahrzeugs dennoch sichergestellt werden, dass dieses nicht wegrollt.

Die erfindungsgemäße Überwachungsvorrichtung zum Betreiben eines Kraftfahrzeugs ist dazu ausgelegt, zu überwachen, ob zwischen einem Getriebesteuergerät eines Automatikgetriebes des Kraftfahrzeugs, einem Wählhebelsteuergerät des Automatikgetriebes und/oder einem Parkbremsensteuergerät einer elektronischen Parkbremse des Kraftfahrzeugs ein Kommunikationsausfall vorliegt. Zusätzlich ist die Überwachungsvorrichtung dazu ausgelegt, zu überwachen, ob aufgrund einer Fehlfunktion am Automatikgetriebe selbst und/oder aufgrund einer Fehlfunktion an einem Wählhebel selbst zum Auswählen von Fahrstufen des Automatikgetriebes eine Parkstellung des Automatikgetriebes nicht eingelegt werden kann. Die Überwachungsvorrichtung ist dazu ausgelegt, das Getriebesteuergerät, das Parkbremsensteuergerät und ein Anzeigesteuergerät einer Anzeigeeinrichtung des Kraftfahrzeugs in Abhängigkeit davon zu betreiben, zwischen welchen der überwachten Steuergeräte ein Kommunikationsausfall erfasst worden ist und ob die Parkstellung aufgrund einer Fehlfunktion am Automatikgetriebe selbst und/oder aufgrund einer Fehlfunktion am Wählhebel selbst nicht eingelegt werden kann. Das Anzeigesteuergerät ist zudem dazu ausgelegt, die Anzeigeeinrichtung zum Anzeigen einer Warnmeldung anzusteuern, mittels welcher signalisiert wird, dass der Fahrer die elektronische Parkbremse betätigen soll, falls erfasst wird, dass beim Getriebesteuergerät und/oder beim Wählhebelsteuergerät ein Kommunikationsausfall vorliegt. Vorteilhafte Ausgestaltungen des erfindungsgemäßen Verfahrens sind als vorteilhafte Ausgestaltungen der erfindungsgemäßen Überwachungsvorrichtung anzusehen, wobei die Überwachungsvorrichtung insbesondere Mittel zur Durchführung der Verfahrensschritte aufweist.

Das erfindungsgemäße Kraftfahrzeug umfasst die erfindungsgemäße Überwachungsvorrichtung oder eine vorteilhafte Ausführungsform der erfindungsgemäßen Überwachungsvorrichtung.

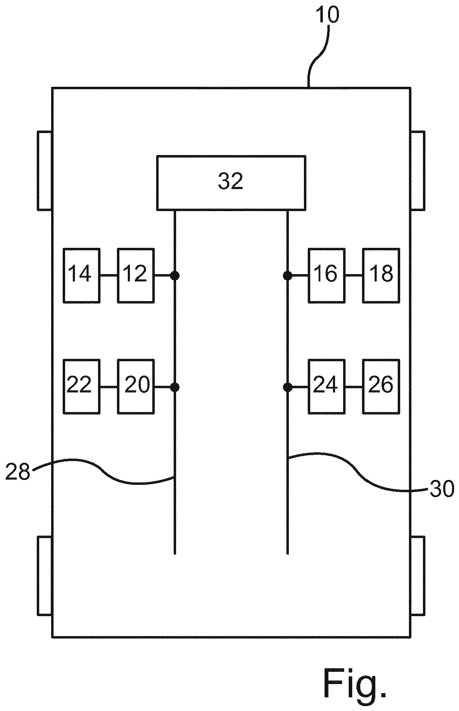

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten Merkmale und Merkmalskombinationen sowie die nachfolgend in der Figurenbeschreibung genanten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Kraftfahrzeugs, welches ein Getriebesteuergerät, ein Wählhebelsteuergerät, ein Parkbremsensteuergerät und ein Anzeigesteuergerät umfasst, die an zwei unterschiedlichen Bussegmenten eines Bussystems des Kraftfahrzeugs angeschlossen sind und miteinander in Kommunikationsverbindung stehen.

Ein Kraftfahrzeug 10 ist in einer schematischen Darstellung in der einzigen Figur gezeigt. Das Kraftfahrzeug 10 umfasst ein Getriebesteuergerät 12 zum Steuern eines Automatikgetriebes 14, ein Wählhebelsteuergerät 16, welches mit einem Wählhebel 18 zum Auswählen von Fahrstufen des Automatikgetriebes 14 verbunden ist, ein Parkbremsensteuergerät 20 zum Ansteuern einer elektronischen Parkbremse 22 sowie ein Anzeigesteuergerät 24 zum Ansteuern einer Anzeigeeinrichtung 26 des Kraftfahrzeugs 10.

Das Getriebesteuergerät 12 und das Parkbremsensteuergerät 20 sind mit einem ersten Bussegment 28 eines nicht näher bezeichneten Bussystems des Kraftfahrzeugs 10 verbunden. Das Wählhebelsteuergerät 16 und das Anzeigesteuergerät 24 sind mit einem zweiten Bussegment 30 des Bussystems des Kraftfahrzeugs 10 verbunden. Die Kommunikation zwischen den beiden Bussegmenten 28, 30 kann dabei über ein Gatewaysteuergerät 32 erfolgen. Insbesondere die Kommunikation zwischen dem Wählhebelsteuergerät 16 und dem Getriebesteuergerät 12 erfolgt über das Gatewaysteuergerät 32.

Möchte ein Fahrer beispielsweise manuell auf die Gangstufenwahl des Automatikgetriebes 14 einwirken, so betätigt er den Wählhebel 18 entsprechend, in Folge dessen das Wählhebelsteuergerät 16 die Gangwahl gemäß der Betätigung des Wählhebels 18 erfasst und diese Information an das Getriebesteuergerät 12 weiterleitet, in Folge dessen das Getriebesteuergerät 12 das Automatikgetriebe 14 entsprechend der erfassten Betätigung des Wählhebels 18 ansteuert.

Üblicherweise kann beim Abstellen des Kraftfahrzeugs 10 sowohl die elektronische Parkbremse 22 betätigt als auch eine Parkstellung P beim Automatikgetriebe 14 eingelegt werden, um das Kraftfahrzeug 10 redundant gegen ein Wegrollen abzusichern. Jedoch kann es vorkommen, dass es zu Kommunikationsausfällen bei dem Getriebesteuergerät 12, dem Wählhebelsteuergerät 16 und/oder dem Parkbremsensteuergerät 20 kommt.

Bei einem Kommunikationsausfall des Getriebesteuergeräts 12 kann es vorkommen, dass die Parkstellung P beim Automatikgetriebe 14 trotz einer entsprechenden Betätigung des Wählhebels 18 nicht mehr eingelegt werden kann. Gleiches kann auch bei einer Störung des Wählhebelsteuergeräts 16 passieren, falls dieses von einem Kommunikationsausfall betroffen ist, beispielsweise weil eine entsprechende Signalerfassung einer Betätigung des Wählhebels 18 durch das Wählhebelsteuergerät 16 gestört oder weil eine Signalweiterleitung vom Wählhebelsteuergerät 16 an das Getriebesteuergerät 12 gestört ist.

Sollte hingegen das Parkbremsensteuergerät 20 von einem Kommunikationsausfall betroffen sein, so kann es passieren, dass trotz einer entsprechenden Betätigung eines Parkbremsenschalters die elektronische Parkbremse 22 des Kraftfahrzeugs 10 nicht aktiviert werden kann.

Nachfolgend wird ein Verfahren zum sicheren Abstellen des Kraftfahrzeugs 10 näher erläutert. Das Verfahren basiert dabei auf einem Redundanzkonzept zum rollgesicherten Abstellen des Kraftfahrzeugs 10, wobei das rollgesicherte Abstellen des Kraftfahrzeugs 10 aufgabenmäßig auf das Getriebesteuergerät 12, das Parkbremsensteuergerät 20 und das Anzeigesteuergerät 24 verteilt wird.

Dem Anzeigesteuergerät 24 kommt dabei eine Warnfunktion zu, indem das Anzeigesteuergerät 24 die Anzeigeeinrichtung 26 zum Anzeigen verschiedenster Warnmeldungen ansteuert, falls der Fahrer über Kommunikationsausfälle des Getriebesteuergeräts 12, des Wählhebelsteuergeräts 16 und/oder des Parkbremsensteuergeräts 20 in Kenntnis gesetzt werden soll. Falls erfasst wird, dass beim Parkbremsensteuergerät 20 ein Kommunikationsausfall vorliegt, steuert das Anzeigesteuergerät 24 die Anzeigeeinrichtung 26 zum Anzeigen einer Warnmeldung an, mittels welcher signalisiert wird, dass der Fahrer die Parkstellung P beim Automatikgetriebe 14 einlegen soll. Vorzugsweise handelt es sich bei der Anzeigeeinrichtung 26 um ein Kombiinstrument des Kraftfahrzeugs 10, so dass die entsprechende Warnmeldung möglichst direkt im Blickfeld des Fahrers angezeigt wird.

Gemäß der vorliegenden Erfindung ist vorgesehen, dass falls erfasst wird, dass beim Getriebesteuergerät 12 und/oder beim Wählhebelsteuergerät 16 ein Kommunikationsausfall vorliegt, steuert das Anzeigesteuergerät 24 die Anzeigeeinrichtung 26 zum Anzeigen einer Warnmeldung an, mittels welcher signalisiert wird, dass der Fahrer die elektronische Parkbremse 22 betätigen soll. Denn bei einem Kommunikationsausfall des Getriebesteuergeräts 12 und/oder des Wählhebelsteuergeräts 16 besteht zumindest die Gefahr, dass die Parkstellung P beim Automatikgetriebe 14 beim Abstellen des Kraftfahrzeugs 10 nicht mehr eingelegt werden kann. Dadurch, dass der Fahrer signalisiert bekommt, dass er die elektronische Parkbremse 22 betätigen soll, kann trotz einer Fehlfunktion beim Einlegen der Parkstellung verhindert werden, dass das abgestellte Kraftfahrzeug wegrollt.

Sollte hingegen erfasst werden, dass sowohl beim Parkbremsensteuergerät 20 als auch beim Getriebesteuergerät 12 ein Kommunikationsausfall vorliegt, steuert das Anzeigesteuergerät 24 die Anzeigeeinrichtung 26 zum Anzeigen einer Warnmeldung an, mittels welcher signalisiert wird, dass der Fahrer das Kraftfahrzeug 10 nur auf einem ebenen Untergrund ohne Gefälle abstellen soll, die Vorderräder so einschlagen soll, dass eines der Vorderräder quer an einem Bordstein anliegt, und/oder dass der Fahrer direkt eine Werkstatt anfahren soll. Denn falls sowohl beim Parkbremsensteuergerät 20 als auch beim Getriebesteuergerät 12 ein Kommunikationsausfall vorliegt, kann das Kraftfahrzeug 10 unter Umständen gar nicht mehr rollgesichert abgestellt werden. Durch Anzeige der besagten Warnmeldungen wird der Fahrer darüber in Kenntnis gesetzt, dass er höchstwahrscheinlich weder die elektronische Parkbremse 22 betätigen noch die Parkstellung P beim Automatikgetriebe 14 einlegen kann.

Darüber hinaus kann es vorgesehen sein, dass das Anzeigesteuergerät 24 die Anzeigeeinrichtung 26 zum Anzeigen einer Warnmeldung ansteuert, mittels welcher signalisiert wird, dass der Fahrer das Kraftfahrzeug 10 abstellen soll, falls erfasst wird, dass bei zumindest einem der überwachten Steuergeräte 12, 16, 20 ein Kommunikationsausfall vorliegt. Ferner kann das Anzeigesteuergerät 24 auch die Anzeigeeinrichtung 26 derart ansteuern, dass mittels der Anzeigeeinrichtung 26 angezeigt wird, welches der überwachten Steuergeräte 12, 16, 20 gerade von einer Fehlfunktion betroffen ist.

Vorzugsweise steuert das Anzeigesteuergerät 24 die Anzeigeeinrichtung 26 zum Anzeigen der jeweiligen Warnmeldungen erst an, sobald erfasst worden ist, dass eine Zündung des Kraftfahrzeugs 10 deaktiviert worden ist, also beispielsweise ein Zustand "Klemme 15 aus" vorliegt.

Neben der reinen Informations- und Warnfunktion durch die entsprechende Ansteuerung der Anzeigeeinrichtung 26 kommt dem Getriebesteuergerät 12 eine Haltefunktion beim Abstellen des Kraftfahrzeugs 10 zu. Das Getriebesteuergerät 12 legt automatisch die Parkstellung P des Automatikgetriebes 14 ein, sobald eine Zündung des Kraftfahrzeugs 10 deaktiviert und falls erfasst worden ist, dass ein Kommunikationsausfall des Wählhebelsteuergeräts 16 und/oder des Parkbremsensteuergeräts 20 vorliegt. Insbesondere legt das Getriebesteuergerät 12 auch dann automatisch die Parkstellung P des Automatikgetriebes 14 ein, falls beim Deaktivieren der Zündung des Kraftfahrzeugs 10 zuvor noch eine Leerlaufstufe bzw. Neutralstufe N des Automatikgetriebes 14 eingelegt war, falls erfasst worden ist, dass ein Kommunikationsausfall des Wählhebelsteuergeräts 16 und/oder des Parkbremsensteuergeräts 20 vorliegt.

Normalerweise wird durch das Getriebesteuergerät 12 nicht automatisch die Parkstellung P eingelegt, wenn beim Abstellen des Kraftfahrzeugs 10 die Neutralstufe N eingelegt war. Dies erfolgt jedoch, falls ein Kommunikationsausfall des Wählhebelsteuergeräts 16 und/oder des Parkbremsensteuergeräts 20 vorliegt. Denn sollte der Fahrer durch Betätigung des Wählhebels 18 die Parkstellung P nicht einlegen können oder das Einlegen bzw. Betätigen der Parkbremse 22 gestört sein, so kann durch automatisches Einlegen der Parkstellung P sichergestellt werden, dass das Kraftfahrzeug 10 nach dem Abstellen nicht wegrollt.

Dem Parkbremsensteuergerät 20 kommt ebenfalls eine Haltefunktion des Kraftfahrzeugs 10 zu, falls die anderen überwachten Steuergeräte 12, 16 einen Kommunikationsausfall aufweisen sollten. Das Parkbremsensteuergerät 20 aktiviert automatisch die Parkbremse 22, sobald eine Zündung des Kraftfahrzeugs 10 deaktiviert und falls erfasst worden ist, dass ein Kommunikationsausfall des Getriebesteuergeräts 12 und/oder des Wählhebelsteuergeräts 16 vorliegt. Dadurch kann ebenfalls sichergestellt werden, dass das abgestellte Kraftfahrzeug 10 nicht wegrollt, auch wenn die Parkstellung P nicht mehr eingelegt werden können sollte.

Sowohl das Getriebesteuergerät 12, das Wählhebelsteuergerät 16 als auch das Parkbremsensteuergerät 20 initiieren nicht selbstständig die Ausgabe von Warnmeldungen, so dass doppelte Warnmeldungen vermieden werden können. Denn die Warnfunktion kommt alleine dem Anzeigensteuergerät 24 zu, welches in den beschriebenen Fällen entsprechende Warnmeldungen über die Anzeigeeinrichtung 26 initiiert.

Das Getriebesteuergerät 12, das Parkbremsensteuergerät 20 und das Anzeigesteuergerät 24 bilden zusammen also eine Art Überwachungsvorrichtung aus, mittels welcher ein rollgesichertes Abstellen des Kraftfahrzeugs 10 ermöglicht wird. Es kann ein sicheres Abstellen des Kraftfahrzeugs 10 auch beim Ausfall von einem der überwachten Steuergeräte 12, 16, 20 sichergestellt werden, sei es über entsprechende Fahrerwarnungen oder über die beschriebenen automatischen Haltefunktionen, ausgelöst durch das Getriebesteuergerät 12 und/oder durch das Parkbremsensteuergerät 20.

Warnmeldungen und Fehleranzeigen werden zentral von dem Anzeigesteuergerät 24 gehandhabt, wodurch mehrfache und redundante Fehlerwarnungen verhindert werden können. Darüber hinaus ergibt sich eine optimale Aufteilung der Fehlerhandhabung auf die beiden beteiligten Bussegmente 28, 30. Ferner wird durch die eindeutige Aufteilung der Fehlermaßnahmen auf die jeweiligen Steuergeräte 12, 20, 24 verhindert, dass unterschiedliche Fehlerreaktionen aufgrund derselben Fehlfunktionen der überwachten Steuergeräte 12, 16, 20 ausgelöst werden. Eine Beschränkung auf die jeweils notwendigen Maßnahmen kann somit sichergestellt werden.

## Patentansprüche

1. Verfahren zum Betreiben eines Kraftfahrzeugs (10), mit den Schritten:
- Überwachen, ob zwischen einem Getriebesteuergerät (12) eines Automatikgetriebes (14) des Kraftfahrzeugs (10), einem Wählhebelsteuergerät (16) des Automatikgetriebes (14) und/oder einem Parkbremsensteuergerät (20) einer elektronischen Parkbremse (22) des Kraftfahrzeugs (10) ein Kommunikationsausfall vorliegt;
- und Überwachen, ob aufgrund einer Fehlfunktion am Automatikgetriebe (14) selbst und/oder aufgrund einer Fehlfunktion an einem Wählhebel (18) selbst zum Auswählen von Fahrstufen des Automatikgetriebes (14) eine Parkstellung (P) des Automatikgetriebes (14) nicht eingelegt werden kann;
- Betreiben des Getriebesteuergeräts (12), des Parkbremsensteuergeräts (20) und eines Anzeigesteuergeräts (24) einer Anzeigeeinrichtung (26) des Kraftfahrzeugs (10) in Abhängigkeit davon, zwischen welchen der überwachten Steuergeräte (12, 20, 24) ein Kommunikationsausfall erfasst worden ist und ob die Parkstellung (P) aufgrund einer Fehlfunktion am Automatikgetriebe (14) selbst und/oder aufgrund einer Fehlfunktion am Wählhebel (18) selbst nicht eingelegt werden kann;
**gekennzeichnet dadurch, dass**
falls erfasst wird, dass beim Getriebesteuergerät (12) und/oder beim Wählhebelsteuergerät (16) ein Kommunikationsausfall vorliegt, das Anzeigesteuergerät (24) die Anzeigeeinrichtung zum Anzeigen einer Warnmeldung ansteuert, mittels welcher signalisiert wird, dass der Fahrer die elektronische Parkbremse (22) betätigen soll.

2. Verfahren nach Anspruch 1,
**dadurch gekennzeichnet, dass**
das Anzeigesteuergerät (24) die Anzeigeeinrichtung (26) zum Anzeigen einer Warnmeldung ansteuert, mittels welcher signalisiert wird, dass der Fahrer die Parkstellung (P) beim Automatikgetriebe (14) einlegen soll, falls erfasst wird, dass beim Parkbremsensteuergerät (20) ein Kommunikationsausfall vorliegt.

3. Verfahren nach einem der vorhergehenden Ansprüche,
**dadurch gekennzeichnet, dass**
das Anzeigesteuergerät (24) die Anzeigeeinrichtung (26) zum Anzeigen einer Warnmeldung ansteuert, mittels welcher signalisiert wird, dass der Fahrer eine von einer Betätigung der elektronischen Parkbremse (22) und eine von einer Betätigung des Automatikgetriebes (14) verschiedene Sicherungsmaßnahme ergreifen soll, falls erfasst wird, dass beim Parkbremsensteuergerät (20) und beim Getriebesteuergerät (12) ein Kommunikationsausfall vorliegt.

4. Verfahren nach einem der vorhergehenden Ansprüche,
**dadurch gekennzeichnet, dass**
das Anzeigesteuergerät (24) die Anzeigeeinrichtung (26) zum Anzeigen einer Warnmeldung ansteuert, mittels welcher signalisiert wird, dass der Fahrer das Kraftfahrzeug (10) abstellen soll, falls erfasst wird, dass bei zumindest einem der überwachten Steuergeräte (12, 20, 24) ein Kommunikationsausfall vorliegt.

5. Verfahren nach einem der Ansprüche 2 bis 4,
**dadurch gekennzeichnet, dass**
das Anzeigesteuergerät (24) erst dann die Anzeigeeinrichtung (26) zum Anzeigen der jeweiligen Warnmeldungen ansteuert, sobald erfasst worden ist, dass eine Zündung des Kraftfahrzeugs (10) deaktiviert worden ist.

6. Verfahren nach einem der vorhergehenden Ansprüche,
**dadurch gekennzeichnet, dass**
das Getriebesteuergerät (12) automatisch die Parkstellung (P) des Automatikgetriebes (14) einlegt, sobald eine Zündung des Kraftfahrzeugs (10) deaktiviert und falls erfasst worden ist, dass ein Kommunikationsausfall des Wählhebelsteuergeräts (16) und/oder des Parkbremsensteuergeräts (20) vorliegt.

7. Verfahren nach einem der vorhergehenden Ansprüche,
**dadurch gekennzeichnet, dass**
das Parkbremsensteuergerät (20) automatisch die Parkbremse (22) aktiviert, sobald eine Zündung des Kraftfahrzeugs (10) deaktiviert und falls erfasst worden ist, dass ein Kommunikationsausfall des Getriebesteuergeräts (12) vorliegt.

8. Überwachungsvorrichtung zum Betreiben eines Kraftfahrzeugs (10), welche dazu ausgelegt ist,
- zu überwachen, ob zwischen einem Getriebesteuergerät (12) eines Automatikgetriebes (14) des Kraftfahrzeugs (10), einem Wählhebelsteuergerät (16) des Automatikgetriebes (14) und/oder einem Parkbremsensteuergerät (20) einer elektronischen Parkbremse (22) des Kraftfahrzeugs (10) ein Kommunikationsausfall vorliegt;
- und zu überwachen, ob aufgrund einer Fehlfunktion am Automatikgetriebe (14) selbst und/oder aufgrund einer Fehlfunktion an einem Wählhebel (18) selbst zum Auswählen von Fahrstufen des Automatikgetriebes (14) eine Parkstellung (P) des Automatikgetriebes (14) nicht eingelegt werden kann;
- das Getriebesteuergerät (12), das Parkbremsensteuergerät (20) und ein Anzeigesteuergerät (24) einer Anzeigeeinrichtung (26) des Kraftfahrzeugs (10) in Abhängigkeit davon zu betreiben, zwischen welchen der überwachten Steuergeräte (12, 20, 24) ein Kommunikationsausfall erfasst worden ist und ob die Parkstellung (P) aufgrund einer Fehlfunktion am Automatikgetriebe (14) selbst und/oder aufgrund einer Fehlfunktion am Wählhebel (18) selbst nicht eingelegt werden kann;
**dadurch gekennzeichnet, dass**
das Anzeigesteuergerät (24) dazu ausgelegt ist, die Anzeigeeinrichtung zum Anzeigen einer Warnmeldung anzusteuern, mittels welcher signalisiert wird, dass der Fahrer die elektronische Parkbremse (22) betätigen soll, falls erfasst wird, dass beim Getriebesteuergerät (12) und/oder beim Wählhebelsteuergerät (16) ein Kommunikationsausfall vorliegt.

9. Kraftfahrzeug (10) mit einer Überwachungsvorrichtung nach Anspruch 8.

## Claims

1. Method for operating a motor vehicle (10), having the steps of:
- monitoring whether a communication failure is present between a transmission control device (12) of an automatic transmission (14) in the motor vehicle (10), a selector lever control device (16) of the automatic transmission (14) and/or a parking brake control device (20) of an electronic parking brake (22) in the motor vehicle (10);
- and monitoring whether a parking position (P) of the automatic transmission (14) cannot be engaged because of a malfunction of the automatic transmission (14) itself and/or because of a malfunction of a selector lever (18) itself for selecting gears in the automatic transmission (14);
- operating the transmission control device (12), the parking brake control device (20) and a display control device (24) of a display apparatus (26) in the motor vehicle (10) depending on the monitored control devices (12, 20, 24) between which a communication failure has been detected and depending on whether the parking position (P) cannot be engaged because of a malfunction of the automatic transmission (14) itself and/or because of a malfunction of the selector lever (18) itself;
**characterised in that**
if it is detected that a communication failure is present in the transmission control device (12) and/or in the selector lever control device (16), the display control device (24) actuates the display apparatus to display a warning message which signals that the driver should engage the electronic parking brake (22).

2. Method according to claim 1,
**characterised in that**
the display control device (24) actuates the display apparatus (26) to display a warning message which signals that the driver should engage the parking position (P) in the automatic transmission (14) if it is detected that a communication failure is present in the parking brake control device (20).

3. Method according to any of the preceding claims,
**characterised in that**
the display control device (24) actuates the display apparatus (26) to display a warning message which signals that the driver should take a safety measure differing from an actuation of the electronic parking brake (22) and from an actuation of the automatic transmission (14) if it is detected that a communication failure is present in the parking brake control device (20) and in the transmission control device (12).

4. Method according to any of the preceding claims,
**characterised in that**
the display control device (24) actuates the display apparatus (26) to display a warning message which signals that the driver should park the motor vehicle (10) if it is detected that a communication failure is present in at least one of the monitored control devices (12, 20, 24).

5. Method according to any of claims 2 to 4,
**characterised in that**
the display control device (24) actuates the display apparatus (26) to display the respective warning messages only once it has been detected that an ignition of the motor vehicle (10) has been deactivated.

6. Method according to any of the preceding claims,
**characterised in that**
the transmission control device (12) automatically engages the parking position (P) of the automatic transmission (14) once an ignition of the motor vehicle (10) is deactivated and if it has been detected that a communication failure of the selector lever control device (16) and/or of the parking brake control device (20) is present.

7. Method according to any of the preceding claims,
**characterised in that**
the parking brake control device (20) automatically activates the parking brake (22) once an ignition of the motor vehicle (10) is deactivated and if it has been detected that a communication failure of the transmission control device (12) is present.

8. Monitoring device for operating a motor vehicle (10), which device is designed to:
- monitor whether a communication failure is present between a transmission control device (12) of an automatic transmission (14) in the motor vehicle (10), a selector lever control device (16) of the automatic transmission (14) and/or a parking brake control device (20) of an electronic parking brake (22) in the motor vehicle (10);
- and monitor whether a parking position (P) of the automatic transmission (14) cannot be engaged because of a malfunction of the automatic transmission (14) itself and/or because of a malfunction of a selector lever (18) itself for selecting gears in the automatic transmission (14);
- operate the transmission control device (12), the parking brake control device (20) and a display control device (24) of a display apparatus (26) in the motor vehicle (10) depending on the monitored control devices (12, 20, 24) between which a communication failure has been detected and depending on whether the parking position (P) cannot be engaged because of a malfunction of the automatic transmission (14) itself and/or because of a malfunction of the selector lever (18) itself;
**characterised in that**
the display control device (24) is designed to actuate the display apparatus to display a warning message which signals that the driver should engage the electronic parking brake (22) if it is detected that a communication failure is present in the transmission control device (12) and/or in the selector lever control device (16).

9. Motor vehicle (10) having a monitoring device according to claim 8.

## Revendications

1. Procédé de fonctionnement d'un véhicule automobile (10), avec les étapes:
- la surveillance s'il existe une perte de communication entre un appareil de commande de transmission (12) d'une transmission automatique (14) du véhicule automobile (10), un appareil de commande de levier de sélection (16) de la transmission automatique (14) et/ou un appareil de commande de frein de stationnement (20) d'un frein de stationnement (22) électronique du véhicule automobile (10);
- et la surveillance si en raison d'un dysfonctionnement au niveau de la transmission automatique (14) elle-même et/ou en raison d'un dysfonctionnement au niveau d'un levier de sélection (18) lui-même pour la sélection de rapports de la transmission automatique (14) une position de stationnement (P) de la transmission automatique (14) ne peut pas être engagée;
- le fonctionnement de l'appareil de commande de transmission (12), de l'appareil de commande de frein de stationnement (20) et d'un appareil de commande d'affichage (24) d'un dispositif d'affichage (26) du véhicule automobile (10) en fonction des appareils de commande (12, 20, 24) surveillés entre lesquels une perte de communication a été détectée et si la position de stationnement (P) ne peut pas être engagée en raison d'un dysfonctionnement au niveau d'une transmission automatique (14) elle-même et/ou en raison d'un dysfonctionnement au niveau du levier de sélection lui-même (18);
**caractérisé en ce que**
s'il est détecté qu'il existe une perte de communication pour l'appareil de commande de transmission (12) et/ou pour l'appareil de commande de levier de sélection (16), l'appareil de commande d'affichage (24) commande le dispositif d'affichage pour l'affichage d'un message d'avertissement, au moyen duquel il est signalé que le conducteur doit actionner le frein de stationnement (22) électronique.

2. Procédé selon la revendication 1,
**caractérisé en ce que**
l'appareil de commande d'affichage (24) commande le dispositif d'affichage (26) pour l'affichage d'un message d'avertissement, au moyen duquel il est signalé que le conducteur doit engager la position de stationnement (P) pour la transmission automatique (14) s'il est détecté qu'il existe une perte de communication pour l'appareil de commande de frein de stationnement (20).

3. Procédé selon l'une des revendications précédentes,
**caractérisé en ce que**
l'appareil de commande d'affichage (24) commande le dispositif d'affichage (26) pour l'affichage d'un message d'avertissement, au moyen duquel il est signalé que le conducteur doit prendre une mesure de sécurité différente d'un actionnement du frein de stationnement (22) électronique et différente d'un actionnement de la transmission automatique (14) s'il est détecté qu'il existe une perte de communication pour l'appareil de commande de frein de stationnement (20) et pour l'appareil de commande de transmission (12).

4. Procédé selon l'une des revendications précédentes,
**caractérisé en ce que**
l'appareil de commande d'affichage (24) commande le dispositif d'affichage (26) pour l'affichage d'un message d'avertissement, au moyen duquel il est signalé que le conducteur doit arrêter le véhicule automobile (10) s'il est détecté qu'il existe une perte de communication pour au moins un des appareils de commande (12, 20, 24) surveillés.

5. Procédé selon l'une des revendications 2 à 4,
**caractérisé en ce que**
l'appareil de commande d'affichage (24) commande seulement le dispositif d'affichage (26) pour l'affichage des messages d'avertissement respectifs dès qu'il a été détecté qu'un allumage du véhicule automobile (10) a été désactivé.

6. Procédé selon l'une des revendications précédentes,
**caractérisé en ce que**
l'appareil de commande de transmission (12) engage automatiquement la position de stationnement (P) de la transmission automatique (14) dès qu'un allumage du véhicule automobile (10) a été désactivé et s'il a été détecté qu'il existe une perte de communication de l'appareil de commande de levier de sélection (16) et/ou de l'appareil de commande de frein de stationnement (20).

7. Procédé selon l'une des revendications précédentes,
**caractérisé en ce que**
l'appareil de commande de frein de stationnement (20) active automatiquement le frein de stationnement (22) dès qu'un allumage du véhicule automobile (10) a été désactivé et s'il a été détecté qu'il existe une perte de communication de l'appareil de commande de transmission (12).

8. Dispositif de surveillance pour le fonctionnement d'un véhicule automobile (10), qui est conçu afin
- de surveiller s'il existe une perte de communication entre un appareil de commande de transmission (12) d'une transmission automatique (14) du véhicule automobile (10), un appareil de commande de levier de sélection (16) de la transmission automatique (14) et/ou un appareil de commande de frein de stationnement (20) d'un frein de stationnement (22) électronique du véhicule automobile (10);
- et de surveiller si en raison d'un dysfonctionnement au niveau de la transmission automatique (14) elle-même et/ou en raison d'un dysfonctionnement au niveau d'un levier de sélection (18) lui-même pour la sélection de rapports de la transmission automatique (14) une position de stationnement (P) de la transmission automatique (14) ne peut pas être engagée;
- de faire fonctionner l'appareil de commande de transmission (12), l'appareil de commande de frein de stationnement (20) et un appareil de commande d'affichage (24) d'un dispositif d'affichage (26) du véhicule automobile (10) en fonction des appareils de commande (12, 20, 24) surveillés, entre lesquels une perte de communication a été détectée et si la position de stationnement (P) ne peut pas être engagée en raison d'un dysfonctionnement au niveau de la transmission automatique (14) elle-même et/ou en raison d'un dysfonctionnement au niveau du levier de sélection (18) lui-même;
**caractérisé en ce que**
l'appareil de commande d'affichage (24) est conçu afin de commander le dispositif d'affichage pour l'affichage d'un message d'avertissement, au moyen duquel il est signalé que le conducteur doit actionner le frein de stationnement (22) électronique s'il est détecté qu'il existe une perte de communication pour l'appareil de commande de transmission (12) et/ou pour l'appareil de commande de levier de sélection (16).

9. Véhicule automobile (10) avec un dispositif de surveillance selon la revendication 8.
